# FASCICULE DE BREVET EUROPEEN

(11) **EP 0 421 891 B1**
(45) Date de publication et mention de la délivrance du brevet: **05.04.1995**
(21) Numéro de dépôt: 90420384.1
(22) Date de dépôt: 24.08.1990
(51) Int. Cl.: H01H 9/54, H01H 71/12

(54) **Disjoncteur statique ultra-rapide à isolement galvanique**
Statischer Schnelltrennschalter mit galvanischer Trennung
Static quick cut out with galvanic disconnection

(30) Priorité: 13.09.1989 FR 8912294
(43) Date de publication de la demande: 10.04.1991
(73) Titulaire: SCHNEIDER ELECTRIC SA, 92100 Boulogne Billancourt (FR)
(72) Inventeur: Mertz, Jean-Luc, F-38050 Grenoble Cedex (FR); Pion-Roux, Gérard, F-38050 Grenoble Cedex (FR); Morel, Robert, F-38050 Grenoble Cedex (FR); Perichon, Pierre, F-38050 Grenoble Cedex (FR)
(74) Mandataire: Hecké, Gérard

(56) Documents cités:
- EP-A- 0 104 981
- DE-A- 3 643 473
- DE-C- 1 106 396
- FR-A- 1 147 477
- FR-A- 1 530 421
- GB-A- 2 207 308

## Description

L'invention est relative à un disjoncteur logé dans un boîtier équipé de bornes d'entrée et de bornes de sortie, et renfermant un commutateur statique connecté électriquement en série avec un appareillage électromécanique ayant un mécanisme de commande à manette pour fermer ou ouvrir un système de contacts principaux, le commutateur étant associé à un circuit de commande destiné à faire passer ledit commutateur de l'état conducteur vers l'état bloqué et vice versa.

Selon le document FR-A-2.533.363 (& EP-A-0 104 981), l'appareillage électromécanique est constitué par un disjoncteur ayant un déclencheur magnétothermique disposé en série dans le circuit principal avec les contacts principaux, et le commutateur statique. Le rôle de ce dernier consiste à établir et à interrompre le courant nominal du pôle, tandis que le disjoncteur assure à la fois la fonction de sectionnement, et la fonction de protection contre les surcharges et courts-circuits. L'ouverture des contacts du disjoncteur suite à des courants de défaut est tributaire de l'intervention du déclencheur et de la réponse du mécanisme. Il en résulte un temps de déclenchement total assez long qui est incompatible pour la protection de circuits à composants électroniques.

L'objet de l'invention consiste à améliorer le temps de réponse d'un disjoncteur statique à isolement galvanique.

Le disjoncteur selon l'invention est caractérisé en ce que le circuit de commande délivre un ordre de blocage au commutateur dès que la valeur de la tension dépasse un seuil prédéterminé, que l'appareillage électromécanique est formé par un sectionneur, que des moyens de verrouillage coopèrent avec le mécanisme pour interdire l'ouverture des contacts principaux du sectionneur lorsque le commutateur statique se trouve dans l'état conducteur, que les moyens de verrouillage comportent un capteur de présence de tension inséré électriquement entre le commutateur statique, et les bornes de sortie, et que les contacts principaux du sectionneur sont connectés électriquement entre le commutateur et les bornes d'entrée, l'ouverture des contacts principaux du sectionneur s'effectuant dans l'état bloqué du commutateur en assurant une isolation galvanique entre les bornes d'entrée et les bornes de sortie correspondantes.

L'interdiction d'ouverture du sectionneur résulte d'un verrouillage électromécanique commandé par un capteur de présence de tension disposé en aval du commutateur statique.

Le capteur de présence de tension comprend un électro-aimant ayant un noyau ou palette mobile, susceptible d'occuper une position active de verrouillage et une position inactive de déverrouillage du mécanisme, respectivement dans l'état conducteur et dans l'état bloqué du commutateur.

L'ouverture du sectionneur peut alors s'effectuer sans arc, en assurant une isolation galvanique entre les bornes d'entrée et de sortie, permettant une intervention sur la charge en toute sécurité.

Le mécanisme du sectionneur actionne un contact auxiliaire, associé au circuit de commande du commutateur, et agencé pour que l'ouverture du contact auxiliaire s'opère avant celle des contacts principaux, au début du mouvement d'ouverture de la manette, et que la fermeture du contact auxiliaire s'effectue après celle des contacts principaux.

Le commutateur statique est formé par un transistor ou un regroupement de transistors de puissance selon le type de source d'énergie à courant continu ou alternatif.
La fonction de protection contre les surcharges et les courts-circuits est prise en compte par un fusible auxiliaire en cas de panne du commutateur statique.

En cas de fonctionnement normal du disjoncteur, la coupure du courant nominal, et d'un courant de défaut, notamment une surcharge ou un court-circuit, est assurée exclusivement par le commutateur statique. Les temps de coupure sont très rapides, de l'ordre de 20 microsecondes.

D'autres avantages et caractéristiques ressortiront plus clairement de la description qui va suivre d'un mode de réalisation de l'invention donné à titre d'exemple , et représenté au dessin annexé, dans lequel :
la figure 1 représente le schéma électrique du disjoncteur dans l'état ouvert pour une source à courant continu.
- la figure 2 est une variante pour une source à courant alternatif.

En référence à la figure, un disjoncteur 10 ultra-rapide est logé dans un boîtier 11 renfermant un commutateur 12 statique connecté électriquement en série avec un sectionneur 14 à contacts 16, 18 principaux séparables. Le boîtier 11 comporte une paire de bornes d'entrée 20, 22 pour le raccordement d'une source d'énergie 24 à courant continu, et une paire de bornes de sortie 26, 28 pour l'alimentation de la charge 30.

Le commutateur 12 statique est formé par un transistor de puissance 32 du type IGBT, dont la gâchette 33 est pilotée par un circuit de commande 34 coopérant par un bus 36 avec des cartes d'entrée-sortie E/S, et par un circuit de liaison 38 avec un contact auxiliaire 40 du sectionneur 14. Un fusible 42 est inséré entre le contact principal 16 du sectionneur 14 et le transistor 32. Une diode 44 de protection du type TRANSIL est branchée en inverse aux bornes du transistor 32, et permet d'écrêter les surtensions lors du passage de l'état bloqué vers l'état conducteur, et réciproquement.

Le mécanisme 46 du sectionneur 14 est actionné par une manette 48 de manoeuvre manuelle susceptible d'occuper une position d'ouverture (en traits pleins), ou une position de fermeture (en traits pointillés). Le déplacement de la manette 48 de la position de fermeture vers la position d'ouverture provoque d'abord l'ouverture du contact auxiliaire 40 avant celle des contacts principaux 16, 18 du sectionneur 14. Le déplacement inverse de la manette 48 de la position d'ouverture vers la position de fermeture assure la fermeture des contacts principaux 16, 18 avant celle du contact auxiliaire 40.

Un capteur de présence de tension 50 comporte un électro-aimant 52 à noyau plongeur 54 destiné à coopérer avec le mécanisme 46 pour verrouiller le sectionneur 14 en position fermée, en interdisant toute tentative d'ouverture manuelle des contacts principaux 16, 18 tant qu'il y a présence de tension en aval du transistor 32. La bobine de l'électro-aimant 52 est connectée en parallèle aux bornes de sortie 26, 28. Une diode de roue libre 56 est branchée en parallèle sur la bobine de l'électro-aimant 52, et sur la charge 30. Le circuit de commande 34 est relié d'autre part au transistor 32, par un circuit de mesure 60 de tension.

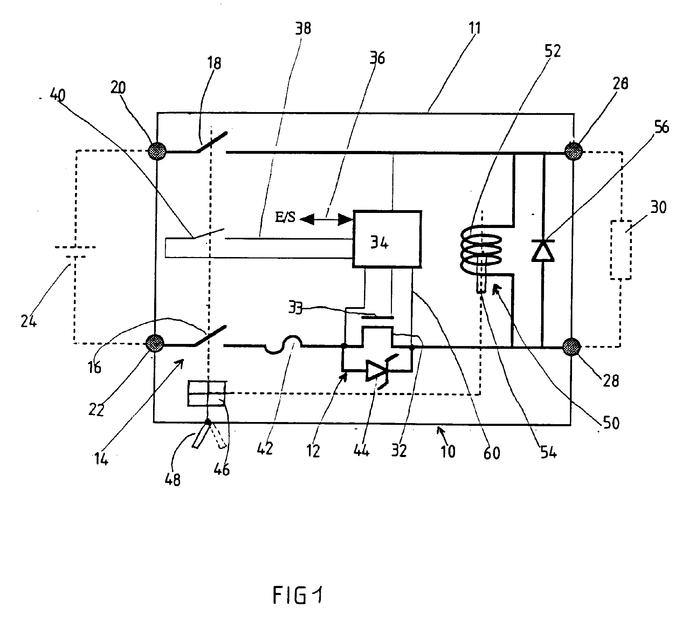

Le fonctionnement du disjoncteur 10 selon la figure 1 est le suivant :
OUVERTURE - FONCTIONNEMENT NORMAL

Le sectionneur 14 possède une fonction de sectionnement pour assurer l'isolation galvanique en cas d'intervention sur la charge 30. L'interruption du courant nominal et d'un courant de surcharge ou de court-circuit est assurée par le commutateur 12 statique, dont la gâchette 33 reçoit un ordre de blocage en provenance du circuit de commande 34. Ce dernier est piloté soit, automatiquement par les signaux de commande des cartes E/S transmis sur le bus 36 et par le circuit de mesure 60 de la tension aux bornes du transistor 32, soit manuellement en fonction de l'état du contact auxiliaire 40. Le fusible 42 n'intervient pas dans ce mode de fonctionnement.

En cas d'apparition d'un courant de surcharge ou de court-circuit, l'impédance du transistor 32 croit, entraînant une variation de tension détectée par le circuit de mesure 60. Le circuit de commande 34 délivre une ordre de blocage dès que la valeur de la tension dépasse un seuil prédéterminé.

L'interruption du courant s'effectue très rapidement dans un temps de l'ordre de 20 microsecondes. La variation d'impédance du transistor 32 permet d'obtenir d'autre part un effet de limitation du courant de court-circuit, avant le blocage effectif du transistor 32. Le courant de court-circuit est limité rapidement à une valeur prédéterminée, par exemple 150 A.

On remarque que la commande d'ouverture automatique par les cartes E/S et le circuit de mesure 60 provoque l'interruption du courant par blocage du transistor 32. La tension aux bornes de l'électro-aimant 52 s'annule et le noyau 54 mobile est rappelé vers une position inactive, entraînant le déverrouillage du mécanisme 46. L'ouverture du sectionneur 14 par la manette 48 est alors autorisée pour assurer le sectionnement.

La commande d'ouverture manuelle du circuit de commande 34 s'effectue au début du mouvement d'ouverture de la manette 48. Les contacts principaux 16, 18 restent verrouillés en position de fermeture, mais le contact auxiliaire 40 s'ouvre durant cette première phase d'ouverture. Le circuit de commande 34 provoque ensuite le blocage du transistor 32 selon le procesus décrit précédemment. L'ordre d'ouverture manuelle par le contact auxiliaire 40 est prioritaire par rapport à la commande automatique par le bus 36.

Dans les deux cas de commande, la coupure de courant nominal et du courant de défaut est assurée par le transistor 32 de puissance, et le sectionneur 14 ne peut s'ouvrir qu'après blocage du transistor 32. L'ouverture des deux contacts principaux 16, 18 du sectionneur 14 isole totalement la charge 30 de la source d'énergie 24.

### FONCTIONNEMENT EN CAS DE PANNE DU COMMUTATEUR STATIQUE

En cas de panne du commutateur 12 statique ou de fonctionnement défectueux du circuit de commande 34, la fonction de coupure n'est pas plus assurée par le transistor 32 qui reste alors conducteur en permanence malgré les ordres d'ouverture en provenance du contact auxiliaire 40, du bus 36, et du circuit de mesure 60. L'état passant du transistor 32 est détecté par l'électro-aimant 52 du capteur de présence de tension 50, et le noyau 54 verrouille le sectionneur 14 en position fermée. Toute tentative d'ouverture du sectionneur 14 par la manette 48 est inhibée par le verrouillage électromécanique, lequel persiste aussi longtemps que la charge 30 reste sous tension. L'alimentation doit alors être interrompue par un interrupteur additionnel (non représenté), disposé en amont des bornes d'entrée 20, 22, et à l'extérieur du boîtier 11. Le fusible 42 assure alors la protection en cas de surcharge ou de court-circuit.

### FERMETURE APRES ISOLEMENT GALVANIQUE

La commande de fermeture manuelle par la manette 48 à partir de l'état ouvert du sectionneur 14 provoque d'abord la fermeture des contacts principaux 16, 18, laquelle s'effectue sans arc, étant donné que le commutateur 12 statique se trouve dans l'état bloqué. Le contact auxiliaire 40 se ferme ensuite lors d'une deuxième phase, et commande le déblocage du transistor 32 pour l'alimentation de la charge 30.

La fermeture automatique par les cartes E/S est impossible lorsque le contact auxiliaire 40 est ouvert.

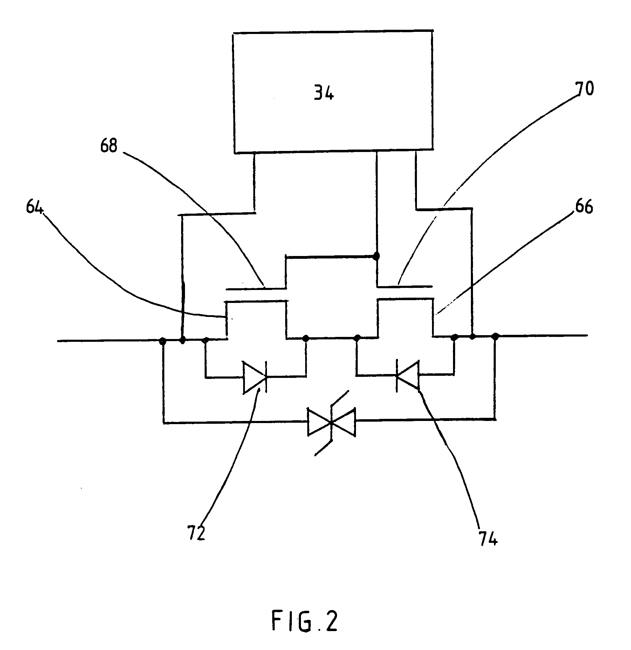

La variante de la figure 2, est adaptée à une source d'énergie 24 à courant alternatif. Il suffit de remplacer le transistor 32 de puissance de la figure 1, par deux transistors de puissance 64,66 IGBT connectés en série et en opposition, ayant leurs bases 68,70 à branchement commun, pilotées par le circuit de commande 34. A chaque transistor 64,66 est associé en parallèle une diode 72,74. La diode 72 du premier transistor 64 laisse passer une demi- alternance positive du courant alternatif qui sera bloquée par le deuxième transistor 66 en cas d'émission d'un ordre d'ouverture par le circuit de commande 34. La diode 74 du deuxième transistor 66 laisse passer une demi- alternance négative de courant qui sera bloquée par le premier transistor 64.

## Revendications

1. Disjoncteur (10) logé dans un boîtier (11) équipé de bornes d'entrée (20,22) et de bornes de sortie (26,28), et renfermant un commutateur (12) statique connecté électriquement en série avec un appareillage électromécanique ayant un mécanisme (46) de commande à manette (48) pour fermer ou ouvrir un système de contacts (16,18) principaux, le commutateur (12) étant associé à un circuit de commande (34) destiné à faire passer ledit commutateur (12) de l'état conducteur vers l'état bloqué, et vice versa, caractérisé en ce que le circuit de commande (34) délivre un ordre de blocage au commutateur (12) dès que la valeur de la tension dépasse un seuil prédéterminé, que l'appareillage électromécanique est formé par un sectionneur (14), que des moyens de verrouillage coopèrent avec le mécanisme (46) pour interdire l'ouverture des contacts principaux (16,18) du sectionneur (14) lorsque le commutateur (12) statique se trouve dans l'état conducteur, que les moyens de verrouillage comportent un capteur (50) de présence de tension inséré électriquement entre le commutateur (12) statique, et les bornes de sortie (26,28), et que les contacts principaux (16,18) du sectionneur (14) sont connectés électriquement entre le commutateur (12) et les bornes d'entrée (20,22), l'ouverture des contacts principaux (16,18) du sectionneur (14) s'effectuant dans l'état bloqué du commutateur (12) en assurant une isolation galvanique entre les bornes d'entrée (20,22) et les bornes de sortie (26,28) correspondantes.

2. Disjoncteur selon la revendication 1, caractérisé en ce que le capteur (50) de présence de tension comprend un électro-aimant (52) ayant un noyau (54) ou palette mobile, susceptible d'occuper une position active de verrouillage et une position inactive de déverrouillage du mécanisme (46), respectivement dans l'état conducteur et dans l'état bloqué du commutateur (12).

3. Disjoncteur selon la revendication 1, caractérisé en ce que le mécanisme (46) du sectionneur (14) coopère avec un contact auxiliaire (40) associé au circuit de commande (34) du commutateur (12), et que des moyens provoquent l'ouverture du contact auxiliaire (40) avant celle des contacts principaux (16,18) au début du mouvement d'ouverture de la manette (48), et la fermeture du contact auxiliaire (40) après celle des contacts principaux (16,18).

4. Disjoncteur selon la revendication 3, caractérisé en ce que le circuit de commande (34) est relié par un bus (36) à des cartes E/S d'entrée sortie pour la commande automatique du commutateur (12), l'ordre d'ouverture manuelle par le contact auxiliaire (40) étant prioritaire par rapport à la commande automatique par le bus (36).

5. Disjoncteur selon l'une des revendications 1 à 4, caractérisé en ce que le commutateur (12) statique comporte un transistor (32) ou un groupement de transistors (64,66) de puissance.

6. Disjoncteur selon la revendication 5, caractérisé en ce qu'un fusible (42) est connecté en série avec le commutateur (12) à l'intérieur du boîtier (11) pour assurer la fonction de protection en cas de panne du commutateur (12) statique.

7. Disjoncteur selon l'une des revendications 2 à 6, caractérisé en ce qu'une diode (56) de roue libre est branchée aux bornes de sortie (26,28), et en parallèle à la bobine de commande de l'électro-aimant (52).

## Patentansprüche

1. Leistungsschalter (10) in einem Gehäuse (11), das mit Eingangsklemmen (20, 22) und Ausgangsklemmen (26, 28) bestückt ist und einen Halbleiterschalter (12) umgibt, der mit einem elektromechanischen Schaltgerät in Reihe geschaltet ist, das einen über einen Kipphebel (48) betätigten Schaltmechanismus (46) zum Ein- und Ausschalten eines Hauptkontaktsystems (16, 18) umfaßt, wobei der Halbleiterschalter (12) einer Steuerschaltung (34) zugeordnet ist, die dazu dient, den genannten Halbleiterschalter (12) vom leitenden in den gesperrten Zustand und umgekehrt umzuschalten, dadurch gekennzeichnet, daß die Steuerschaltung (34) den Halbleiterschalter (12) mit einem Sperrbefehl beaufschlagt, sobald die Spannung einen bestimmten Schwellwert überschreitet, daß das elektromechanische Schaltgerät aus einem Trennschalter (14) besteht, daß Verriegelungsmittel mit dem Schaltmechanismus (46) zusammenwirken, um ein Ausschalten der Hauptkontakte (16, 18) des Trennschalters (14) zu verhindern, wenn sich der Halbleiterschalter (12) im leitenden Zustand befindet, daß die Verriegelungsmittel eine, zwischen den Halbleiterschalter (12) und die Ausgangsklemmen (26, 28) geschaltete Spannungsprüfschaltung (50) umfassen, und daß die Hauptkontakte (16, 18) des Trennschalters (14) zwischen den Halbleiterschalter (12) und die Eingangsklemmen (20, 22) geschaltet sind, wobei das Ausschalten der Hauptkontakte (16, 18) des Trennschalters (14) im gesperrten Zustand des Halbleiterschalters (12) erfolgt und so eine galvanische Trennung zwischen den Eingangsklemmen (20, 22) und den zugehörigen Ausgangsklemmen (26, 28) gewährleistet ist.

2. Leistungsschalter nach Anspruch 1, dadurch gekennzeichnet, daß die Spannungsprüfschaltung (50) einen Elektromagneten (52) mit beweglichem Kern (54) oder Anker umfaßt, die entsprechend dem leitenden bzw. gesperrten Zustand des Halbleiterschalters (12) eine aktive Stellung zur Verriegelung und eine inaktive Stellung zur Entriegelung des Schaltmechanismus' (46) einnehmen können.

3. Leistungsschalter nach Anspruch 1, dadurch gekennzeichnet, daß der Schaltmechanismus (46) des Trennschalters (14) mit einem, der Steuerschaltung (34) des Halbleiterschalters (12) zugeordneten Hilfskontakt (40) zusammenwirkt, und daß Mittel die Abschaltung des Hilfskontakts (40) vor der Abschaltung der Hauptkontakte (16, 18) zu Beginn des Ausschalthubs des Kipphebels (48) und die Einschaltung des Hilfskontakts (40) nach der Einschaltung der Hauptkontakte (16, 18) bewirken.

4. Leistungsschalter nach Anspruch 3, dadurch gekennzeichnet, daß die Steuerschaltung (34) über einen Bus (36) mit Ein-/Ausgabebaugruppen E/S für die automatische Ansteuerung verbunden ist, wobei der über den Hilfskontakt (40) erteilte manuelle Ausschaltbefehl eine höhere Priorität hat als die automatische Ansteuerung über den Bus (36).

5. Leistungsschalter nach irgendeinem der vorhergehenden Ansprüche, dadurch gekennzeichnet, daß der Halbleiterschalter (12) einen Leistungstransistor (32) oder eine Leistungstransistorschaltung (64, 66) umfaßt.

6. Leistungsschalter nach Anspruch 5, dadurch gekennzeichnet, daß eine Sicherung (42) im Innern des Gehäuses (11) in Reihe mit dem Halbleiterschalter (12) geschaltet ist, um die Schutzfunktion bei defektem Halbleiterschalter (12) zu gewährleisten.

7. Leistungsschalter nach einem der Ansprüche 2 bis 6, dadurch gekennzeichnet, daß eine Freilaufdiode (56) an die Ausgangsklemmen (26, 28) sowie parallel zur Steuerspule des Elektromagneten (52) geschaltet ist.

## Claims

1. A circuit breaker (10) housed in a case (11) equipped with input terminals (20, 22) and output terminals (26, 28), and housing a static switch (12) electrically connected in series with an electromechanical swltchgear device having a control mechanism (46) with a handle (48) to close or open a system of main contacts (16, 18), the switch (12) being associated with a control circuit (34) designed to switch said switch (12) from the on state to the off state and vice-versa, characterized in that the control circuit (34) delivers a turn-off order to the switch (12) as soon as the value of the voltage exceeds a preset threshold, that the electromechanical switchgear device is formed by a disconnecting switch (14), that locking means cooperate with the mechanism (46) to prevent the main contacts (16,18) of the disconnecting switch (14) from opening when the static switch (12) is in the on state, that the locking means comprise a voltage sensor (50) electrically connected between the static switch (12) and the output terminals (26,28), and that the main contacts (16,18) of the disconnecting switch (14) are electrically connected between the static switch (12) and the input terminals (20,22), opening of the main contacts (16,18) of the disconnecting switch (14) taking place in the off state of the switch (12) and providing galvanic isolation between the input terminals (20,22) and the corresponding output terminals (26,28).

2. The circuit breaker according to claim 1, characterized in that the voltage sensor (50) comprises an electromagnet (52) having a moving core (54) or blade, capable of occupying an active locking position and an inactive unlocking position of the mechanism (46), respectively in the on state and in the off state of the switch (12).

3. The circuit breaker according to claim 1, characterized in that the mechanism (46) of the disconnecting switch (14) cooperates wich an auxiliary contact (40) associated with the control circuit (34) of the switch (12), and that means bring about opening of the auxiliary contact (40) before that of the main contacts (16, 18), at the beginning of the opening movement of the handle (48), and closing of the auxiliary contact (40) after that of the main contacts (16, 18).

4. The circuit breaker according to claim 3, characterized in that the control circuit (34) is connected by a bus (36) to input-output boards (E/S) for automatic control of the switch (12), the manual opening order by the auxiliary contact (40) having priority over the automatic control by the bus (36).

5. The circuit breaker according to one of the claims 1 to 4, characterized in that the static switch (12) comprises a power transistor (32) or a set of pcwer transistors (64, 66).

6. The circuit breaker according to claim 5, characterized in that a fuse (42) is connected in series with the switch (12) inside the case (11) to provide the protection function in the event of failure of the static switch (12).

7. The circuit breaker according to one of the claims 2 to 6, characterized in that a free-wheel diode (56) is connected to the output terminals (26, 28), in parallel with the operating coil of the electromagnet (52).
